Europäisches Patentamt

European Patent Office

Office européen des brevets

(11) Publication number: **0 407 863 A1**

# EUROPEAN PATENT APPLICATION

(21) Application number: 90112699.5

(22) Date of filing: 03.07.90

(51) Int. Cl.5: **H01R 13/52**

(30) Priority: 10.07.89 JP 177338/89

(43) Date of publication of application:
16.01.91 Bulletin 91/03

(84) Designated Contracting States:
DE ES FR GB IT

(71) Applicant: AMP INCORPORATED
470 Friendship Road
Harrisburg Pennsylvania 17105(US)

(72) Inventor: Kakitani, Yutaka
5-18-18, Kinuta
Setagaya-ku, Tokyo(JP)
Inventor: Aoyama, Koji
2019-15, Hon-machida
Machida-shi, Tokyo(JP)
Inventor: Tsukakoshi, Masao
3210-3, Shimo-oyamada-cho
Machida-shi, Tokyo(JP)

(74) Representative: Klunker . Schmitt-Nilson .
Hirsch
Winzererstrasse 106
D-8000 München 40(DE)

(54) Sealing grommet for electrical connector.

(57) A sealing grommet (10) having wire receiving passageways (13) therethrough is disclosed. More particularly the passageways (13) include a large cross section portion (14) and a smaller cross section portion (15) which is defined by a tubular section (16). Further, the tubular section (16) is surrounded by a hollow section (17) which permits the tubular section (16) to expand thereinto.

## FIG.2

Xerox Copy Centre

## SEALING GROMMET FOR AN ELECTRICAL CONNECTOR

The present invention relates generally to a sealing grommet for an electrical connector and more specifically to a sealing grommet to be installed onto a wire insertion face of a connector housing to allow insertion of wires connected to respective contacts (or terminals) and for providing water tight passageways in the housing.

In this type of electrical connector for use; e.g., in an automobile, it was a common practice to install a sealing grommet at each wire insertion opening in a housing so that water or water vapor would not invade the housing through the gap between the wire and the connector housing. The sealing grommet had a wire passageway which was of a smaller diameter than the diameter of the wire to provide for a water tight contact with the wire. It was, therefore, not easy to insert the contact connected to one end of the wire through the passageway because the contact had a larger diameter than the wire. Therefore, the contact was normally inserted through the passageway by using a tool for expanding the passageway. However, such operation is not necessarily easy and could damage the grommet.

The sealing grommet according to the present invention intends to solve the problem noted above. It is made from an elastomeric material and has a desired number of wire passageways extending from a first face to a second face opposite to the first face.

Each of the wire passageways comprises a larger cross section portion to a desired depth from the first face and a smaller cross section portion from the bottom of the larger cross section portion to the second face. The smaller cross section portion is defined by a tubular section and a hollow section between the periphery of the tubular section and the main body of the sealing grommet for allowing expansion of the tubular section.

FIGURE 1 is a perspective view of one embodiment of the sealing grommet of the present invention;

FIGURE 2 is a cross-sectional view of the grommet taken along lines II-II in Figure 1.

FIGURE 3 is a cross-sectional view of another embodiment of the grommet; and

FIGURE 4 is a cross sectional view of the sealing grommet installed on a connector.

An embodiment of the present invention will be described hereunder by reference to the accompanied drawings.

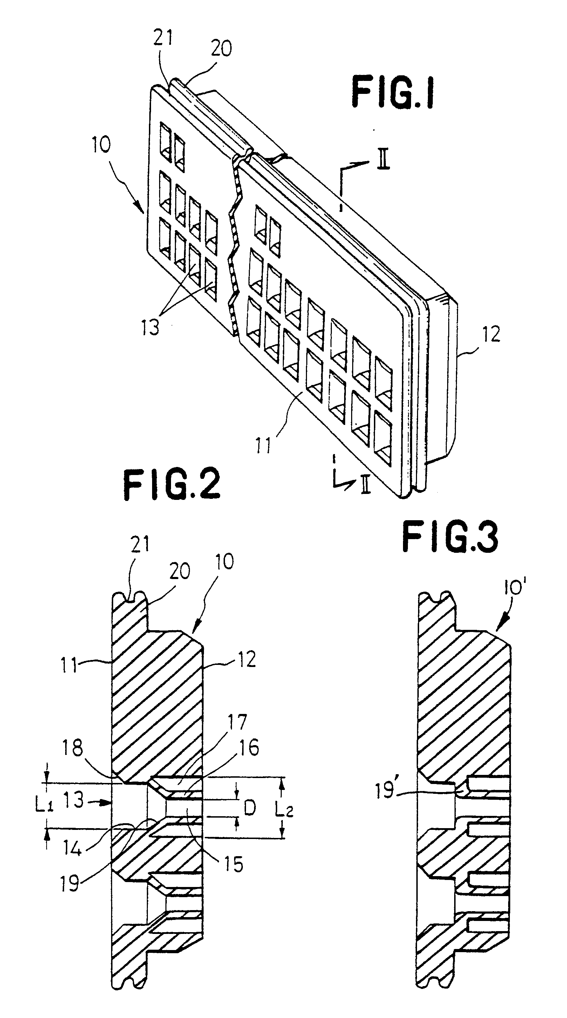

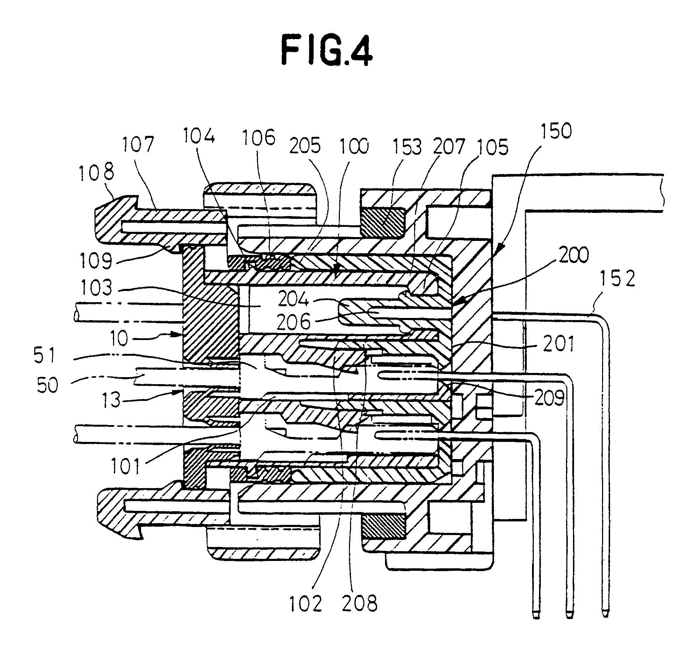

Illustrated in Figure 1 is a perspective view of a sealing grommet 10 with a cross section view along the line II-II in Figure 1 illustrated in Figure 2. The sealing grommet 10 is a plate like member made from, for example, silicone rubber or any other suitable material with rubber hardness of 20 to 40 durometers. The sealing grommet 10 may contain a suitable amount of oil to form an oil film at the contact surface with the wire 50 (see Figure 4) without degrading the rubber characteristic, thereby enhancing its water proof performance. The sealing grommet 10 has a plurality of wire passageways 13 extending from its first face 11 to its second face 12. Each passageway 13 comprises a larger cross section portion 14 extending from the first face 11 to a certain depth substantially equal to the center of the passageway 13 and a smaller cross section portion 15 which extends to the second face 12. The smaller cross section portion 15 is defined by a tubular section 16 and a hollow or groove section 17 between the periphery of the tubular section 16 and the main body of the sealing grommet 10. Tapers 18, 19 are formed at the mouth of the larger cross section portion 14 in the first face 11 and the junction section between the larger and the smaller cross section portions 14, 15. A transversal length $L_1$ of the larger cross section portion 14 is chosen to be substantially equal to the diameter of the female (receptacle) contact or terminal 51 (see Figure 4) while the diameter D of the smaller cross section portion 15 is slightly smaller than the diameter of the wire 50. A transversal length $L_2$ of the hollow section 17 is chosen to be slightly larger than the $L_1$ of the larger cross section portion 14 by the length equal to the thickness of the wall of the tubular section 16.

Additionally, the sealing grommet 10 has an edge section 20 expanding outwardly at the side of the first face 11. A channel 21 is formed along the outer periphery of the edge section 20 for ease of compressing the outer circumference.

Although not shown in the drawings, the tubular section 16 may extend beyond the second face 12. Also, a plurality of ribs may be formed to interconnect the outer surface of the tubular section 16 and the outer circumference of the hollow section 17, thereby dividing the hollow section into a plurality of sub-sections without limiting flexibility of the tubular section 16.

Illustrated in Figure 3 is a cross section view of another embodiment of the sealing grommet indicated by reference numeral 10′, similar to Figure 2. In this alternative embodiment, a section 19′ is formed substantially at right angle (with respect to the axis of the passageway 13) to replace the taper 19.

Illustrated in Figure 4 is a cross section view of a first connector housing 100 having its wire insertion recess with the sealing grommet 10 mounted therein and mated with a second connector housing 150. Female (receptacle) contacts 51 are inserted in contact receiving cavities 101 in the first connector housing 100 and the wire passageways 13 in the sealing grommet 10. The female contacts 51 are engaged with lances 102 in the contact receiving cavities 101 simultaneously with insertion thereof, thereby preventing the contacts 51 from being pulled out of the cavities 101 in the opposite direction to the insertion. Mated at the front mouth of the first connector housing 100 is a latching member 200 comprising a latching section 204 extending from a base section 201 to a latching chamber 103 of the first connector housing 100 and a bearing member 205 extending between the first and the second connector housings 100, 150. The latching section 204 has a hollow section 206 and projections 207 and engages on projected edge 105 of the first connector housing 100 into the latching chamber 103 by easily deforming the latching section 204 into the hollow section 206 when the latching member 200 is mated with the first connector housing 100. Accordingly, the latching section 204 is protected from being pulled off from the first connector housing 100 when the second connector housing 150 is removed from the first connector housing 100. The bearing member 205 pushes an elastomeric sealing grommet 106 engaging with a projection 104 at the outer circumference of the first connector housing 100 at the tip. The member 205 prevents the sealing grommet 106 from slipping off when the second connector housing 150 is removed from the first connector housing 100 and also improves tightness of the sealing grommet 106 with the first and the second connector housings 100, 150. In addition, the latching member 200 is provided with a latching member 208 located at the upper surface of the latching member 102 extending from the base 201 toward the contact receiving cavities 101. This prevents the latching member 102 from moving upwardly. That is, the female contacts 51 are double locked by the latching members 102 and 208. Retained in the second connector housing 150 are male contacts 152 which extend through-holes 209 in the latching member 200 to make electrical contact with the respective female contacts 51. The first connector housing 100 engages a connector cover (not shown) at latching members 108 formed integrally with projection strips 107. An elastomeric sealing grommet 153 is installed on the second connector housing 150. The sealing grommet 153 is used for water tighting with another connector cover (not shown) to be mated with the second connector housing 150.

The sealing grommet according to the present invention constructed and operating as discussed hereinbefore has tubular sections with smaller cross section apertures of greater compliance for enabling easy passage of the contacts and wires without using any insertion tool, thereby improving wire insertion operation.

Additionally, the improved flexibility of the tubular sections at the joints to the larger cross section portions enables the tubular sections to follow the wires in slanted condition, thereby maintaining good water tight characteristic between the wires and the tubular sections to prevent water and vapor from gaining access into the connector housing.

## Claims

1. A sealing grommet (10) for electrical connectors and having a number of wire passageways (13) extending from a first face (11) to a second face (12) opposite to the first face (11), characterized in that each passageway (13) comprises a large cross section portion (14) extending to a given depth from said first face (11) and a smaller cross section portion (15) extending from said large cross section portion (14) to the second face (12), said smaller cross section portion (15) being defined by a tubular section (16) and a hollow section (17) between the outer periphery of the tubular section (16) and the body of the grommet (10), said hollow section (17) permitting the expansion of the tubular section (16).

2. The grommet (10) of Claim 1 further characterized in that the tubular section (16) has a smaller diameter relative to the large cross section portion (14).

3. The grommet (10) of Claim 1 or 2 further characterized in that the hollow section (17) has a larger diameter relative to the large cross section portion (14).

4. The grommet (10) of any of claims 1 to 3 further characterized in that an edge section 20 extends outwardly from an edge of the first face (11).

5. The grommet (10) of claim 4 further characterized in that a channel (21) is provided along the outer periphery of the edge section (20).

# FIG.1

21 20

10

13

12

11

II

II

# FIG.2

21 20 10

11 12

17
18 16
13 D L₂
L₁
14
19 15

# FIG.3

10'

19'

# FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2401535 (AMP INC.)<br>* claim 1; figures 4, 5 *<br>--- | 1 | H01R13/52 |
| A | EP-A-0278544 (PIDOU B.V.)<br>* abstract; figure 2 *<br>--- | 1 | |
| A | US-A-4460227 (D.J,BALL)<br>* abstract; figure 2 *<br>----- | 1 | |
| | | | TECHNICAL FIELDS SEARCHED (Int. Cl.5 )<br><br>H01R<br>H02G<br>H01B |

The present search report has been drawn up for all claims

| Place of search | Date of completion of the search | Examiner |
|---|---|---|
| THE HAGUE | 19 OCTOBER 1990 | HORAK A.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document